Europäisches Patentamt

European Patent Office

Office européen des brevets

(19)

(11) **EP 0 957 588 A1**

(12) **EUROPEAN PATENT APPLICATION**
published in accordance with Art. 158(3) EPC

(43) Date of publication:
17.11.1999 Bulletin 1999/46

(21) Application number: 96942561.0

(22) Date of filing: 18.12.1996

(51) Int. Cl.⁶: $H04B\ 1/26$, $H04H\ 5/00$

(86) International application number:
PCT/JP96/03686

(87) International publication number:
WO 98/27664 (25.06.1998 Gazette 1998/25)

(84) Designated Contracting States:
BE DE FR GB IT NL

(71) Applicant: AIWA CO., LTD.
Taito-ku, Tokyo 110 (JP)

(72) Inventor: IBUKI, Takinori
Tokyo 110 (JP)

(74) Representative:
Müller, Frithjof E., Dipl.-Ing.
Patentanwälte
MÜLLER & HOFFMANN,
Innere Wiener Strasse 17
81667 München (DE)

(54) **RADIO RECEIVER, RADIO RECEIVING METHOD, AND AUDIO TRANSMITTER**

(57) The present invention relates to a receiver and an audio transmitting apparatus both used when, for example, audio signals or the like are frequency-modulated and the frequency-modulated signals are transmitted by radio. A transmit signal lying within a 900MHz band, which is received by a receiving antenna (501), is amplified by an RF amplifier (502). The amplified transmit signal is caused to pass through a band-pass filter (503) so as to be supplied to a mixer (504) where it is converted into an intermediate frequency signal whose carrier frequency is 10.7MHz. In this case, the frequency of the intermediate frequency signal is brought to 1/30 or less as compared with the frequency of the transmit signal. Since, in this case, a local oscillation frequency is set so as to be the upper side of a transmit frequency and a band used for the frequency of the transmit signal is selected as a band that reduces the rate of occurrence of image interference when the local oscillation frequency is set to the upper side of the transmit frequency, the image interference can be avoided at a high probability. Since the receiver is of a mixer-driven single conversion type, it can be configured simply and at low cost.

F I G. 1

## Description

### Technical Field

The present invention relates to a receiver, a receiving method and an audio transmitting apparatus capable of being constructed simply and at low cost by converting the frequency of a transmit signal into an intermediate frequency signal with a single frequency converting means.

### Background Art

An audio transmitting apparatus has heretofore been proposed wherein on the transmitter side, audio signals outputted from a television receiver or an audio system or the like are frequency-modulated to form a transmit signal and the transmit signal is transmitted from a transmitting antenna, while on the receiver side, said transmit signal received by a receiving antenna is processed to obtain the audio signals.

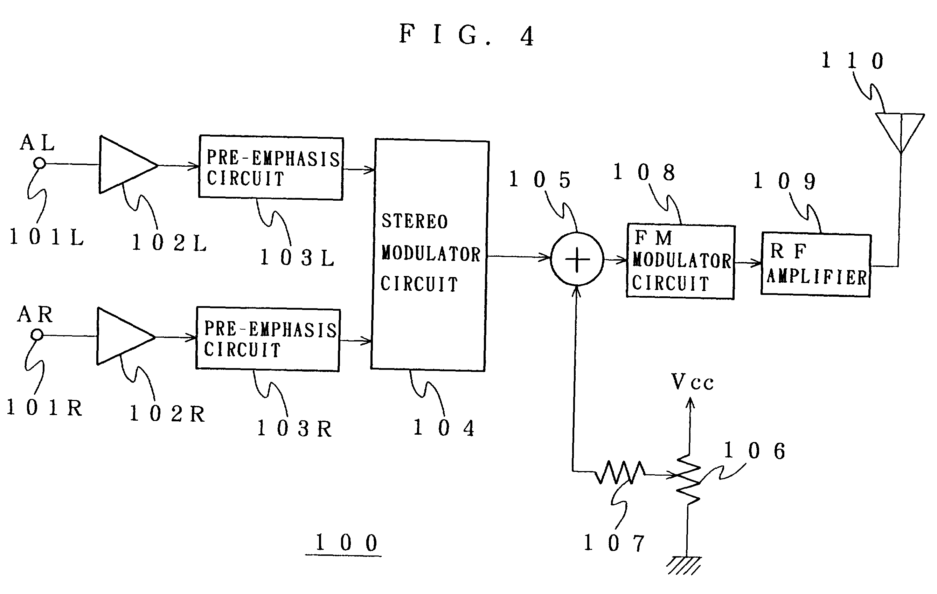

Fig. 4 shows a transmitter 100, which constitutes an audio transmitting apparatus. The transmitter 100 has input terminals 101L and 101R supplied with a left channel audio signal AL and a right channel audio signal AR outputted from, for example, a television receiver, buffer amplifiers 102L and 102R, and pre-emphasis circuits 103L and 103R for emphasizing high frequencies of the audio signals AL and AR. The buffer amplifiers 102L and 102R are respectively inserted between the input terminal 101L and the pre-emphasis circuit 103L and between the input terminal 101R and the pre-emphasis circuit 103R.

The transmitter 100 has also a stereo modulator circuit 104 for obtaining a stereo-modulated signal of the pilot-tone system, using the audio signals AL and AR whose high frequencies are emphasized by the pre-emphasis circuits 103L and 103R. In this case, a subcarrier frequency is set to 3fh so that beat signals composed of horizontal-frequency (fh) components of a video signal, which are contained in the audio signals AL and AR, are prevented from being generated within an audio frequency band.

Further, the transmitter 100 includes an adder 105 for adding a bias voltage to the stereo-modulated signal outputted from the stereo modulator circuit 104, and a variable resistor 106 for supplying the bias voltage to the adder 105. One end of the variable resistor 106 is connected to a power source terminal (Vcc) and the other end thereof is grounded. A voltage appeared in a moving element of the variable resistor 106 is supplied to the adder 105 through a resistor 107 as a bias voltage.

Moreover, the transmitter 100 has an FM modulator circuit 108 for effecting an FM (frequency modulation) modulating process on the stereo-modulated signal added with the bias voltage outputted from the adder 105. The FM modulator circuit 108 is composed of a voltage-controlled oscillator. Since the stereo-modulated signal added with the above-described bias voltage is supplied to the FM modulator circuit 108 as a control signal, a transmit signal (FM-modulated signal) whose carrier frequency falls within a 900MHz band, is obtained.

The transmitter 100 has an RF (radio frequency) amplifier 109 for amplifying the transmit signal outputted from the FM modulator circuit 108 up to a transmittable level, and a transmitting antenna 110 for transmitting the transmit signal amplified by the RF amplifier 109 to the receiving side.

In the above-described construction, the audio signals AL and AR respectively supplied to the input terminals 101L and 101R are respectively supplied via the buffer amplifiers 102L and 102R to the pre-emphasis circuits 103L and 103R where they are subjected to high-frequency emphasis, followed by supply to the stereo modulator circuit 104 from which the stereo-modulated signal of pilot tone system is formed. After the bias voltage is added to the stereo-modulated signal by the adder 105, the stereo-modulated signal is supplied to the FM modulator circuit 108 where it is subjected to an FM modulation process, whereby the transmit signal (FM-modulated signal) whose carrier frequency falls within the 900MHz band, is formed. The carrier frequency, accordingly, the transmit frequency can be adjusted by shifting the location of the moving element of the variable resistor 106 to adjust the bias voltage. The FM-modulated signal outputted from the FM modulator circuit 108 is amplified by the RF amplifier 109, and then it is supplied to the transmitting antenna 110 so as to be transmitted to the receiving side.

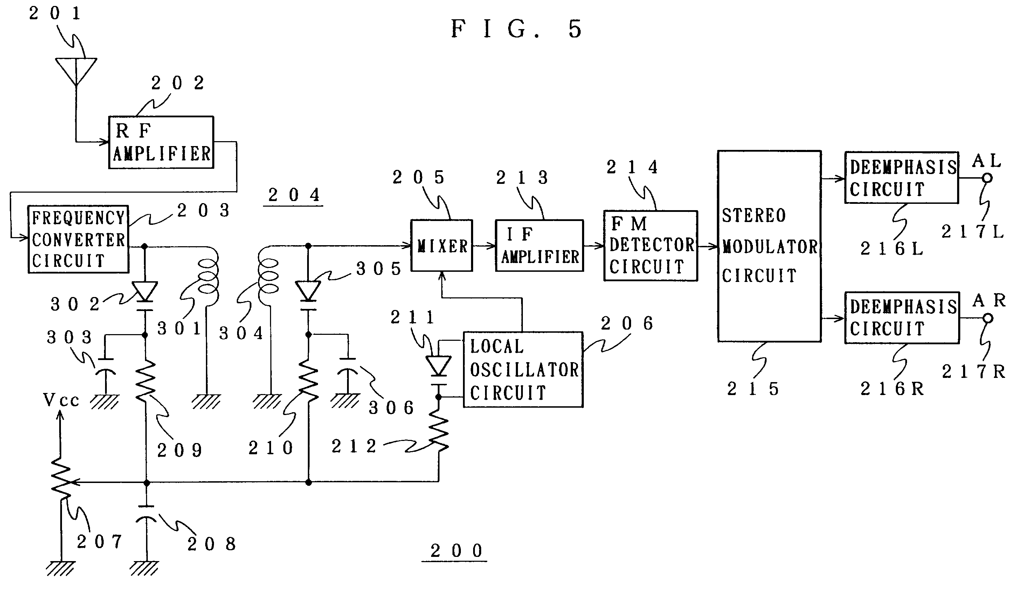

Next, Fig. 5 shows a receiver 200, which constitutes the audio transmitting apparatus. The receiver 200 has a receiving antenna 201 for receiving a transmit signal sent from the transmitting side, an RF amplifier 202 for amplifying the transmit signal received by the receiving antenna 201, a frequency converter circuit 203 for converting the frequency of the transmit signal amplified by the RF amplifier 202 into a first intermediate frequency signal whose carrier frequency is lowered as compared with the 900MHz band, a tuning circuit 204 for selecting an intended frequency signal in response to the signal outputted from the frequency converter circuit 203, a mixer 205 for converting the frequency of the frequency signal selected by the tuning circuit 204 into a second intermediate frequency signal whose carrier frequency is lower than that of the first intermediate frequency signal, a local oscillator circuit 206 for supplying a local oscillation signal to the mixer 205, and a variable resistor 207 for obtaining a tuning voltage.

The tuning circuit 204 is provided as a double-tuned configuration. That is, the output side of the frequency converter circuit 203 is grounded through a coil 301 and is also grounded through a series circuit composed of a variable capacitance diode (varicap) 302 and a capacitor 303. The input side of the mixer 204 is grounded through a coil 304 electro-magnetically coupled to the coil 301 and is also grounded through a series circuit composed of a variable capacitance diode 305 and a capacitor 306.

Further, one end of the variable resistor 207 is connected to a power source terminal (Vcc) and the other end thereof is grounded. Further, a moving element of the variable resistor 207 is grounded via a capacitor 208. A tuning voltage appeared in the moving element of the variable resistor 207 is applied via a resistor 209 to a connection point at which the variable capacitance diode 302 and the capacitor 303 are connected to each other. Further, the tuning voltage is also applied via a resistor 210 to a connection point at which the variable capacitance diode 305 and capacitor 306 are connected to each other.

A variable capacitance diode 211 is connected to the local oscillator circuit 206. The tuning voltage obtained at the moving element of the variable resistor 207 is applied to the anode of the variable capacitance diode 211 through a resistor 212. In this case, the frequency of the local oscillation signal outputted from the local oscillator circuit 206 can be adjusted by shifting the position of the moving element of the variable resistor 207 to adjust the tuning voltage, whereby a tuning operation can be performed. Since the tuning circuit 204 is also supplied with the tuning voltage to adjust the capacities of the variable capacitance diodes 302 and 305 as described above, the tuning frequency of the tuning circuit 204 is varied in synchronism with a variation in the frequency of the local oscillation signal due to the tuning operation.

Further, the receiver 200 includes an intermediate frequency amplifier 213 for amplifying the second intermediate frequency signal outputted from the mixer 205, an FM detector circuit 214 for subjecting the second intermediate frequency signal amplified by the intermediate frequency amplifier 213 to an FM-detecting process to obtain a stereo-modulated signal as a baseband signal, a stereo demodulator circuit 215 for subjecting the stereo-modulated signal outputted from the FM detector circuit 214 to a stereo demodulating process to obtain a left channel audio signal AL and a right channel audio signal AR, deemphasis circuits 216L and 216R for respectively effecting a high-frequency attenuating process to the audio signals AL and AR outputted from the stereo demodulator circuit 215 to thereby restore the frequency response of the receiver 200 to flatness, and output terminals 217L and 217R for respectively outputting the audio signals AL and AR outputted from the deemphasis circuits 216L and 216R.

In the above-described construction, the 900MHz-band transmit signal from the transmitting side, which is received by the receiving antenna 201, is amplified by the RF amplifier 202 and frequency-converted into the first intermediate frequency signal by the frequency converter circuit 203, which signal is selected by the tuning circuit 204, followed by supply to the mixer 205 where it is converted into the second intermediate frequency signal. Further, the second intermediate frequency signal outputted from the mixer 205 is amplified by the intermediate frequency amplifier 213 and thereafter subjected to the FM-detecting process by the FM detector circuit 214, so that the stereo-modulated signal of pilot tone system is obtained. Next, the stereo-modulated signal is supplied to the stereo demodulator circuit 215 where it is subjected to the stereo-demodulating process to obtain the audio signals AL and AR. The resultant audio signals AL and AR are sent to the output terminals 217L and 217R through the deemphasis circuits 216L and 216R respectively. Thus, a stereo audio output based on the audio signals AL and AR can be obtained by connecting, for example, a headphone to the output terminals 217L and 217R.

Meanwhile, in the receiver 200 employed in the audio transmitting apparatus, the 900MHz-band transmit signal sent from the transmitting side is frequency-converted into the first intermediate signal by the frequency converter circuit 203. Further, the first intermediate frequency signal is frequency-converted into the second intermediate frequency signal by the mixer 205. Moreover, the tuning circuit 204 provided in the double-tuned configuration is inserted into a stage preceding the mixer 205. Therefore, a problem arises in that the structure becomes complicated and expensive.

It is therefore an object of the present invention to provide a receiver, a receiving method and an audio transmitting apparatus capable of being constructed simply and at low cost.

Disclosure of the Invention

A receiver according to the present invention comprises a receiving antenna for receiving a transmit signal, single frequency converting means for converting the frequency of the transmit signal received by the receiving antenna into an intermediate frequency signal, and detecting means for detecting the intermediate frequency signal outputted from the frequency converting means to obtain a baseband signal, wherein the frequency converting means sets the frequency of the transmit signal to 1/30 or less to obtain the intermediate frequency signal.

A receiving method according to the present invention comprises a step for receiving a transmit signal, a step for converting a frequency of the received transmit signal into 1/30 or less to obtain an intermediate frequency signal, and a step for detecting the intermediate frequency signal to obtain a baseband signal.

The frequency of the transmit signal received by the receiving antenna is converted into the frequency of 1/30 or less by the single frequency converting means to obtain the intermediate frequency signal. The resultant intermediate frequency signal is detected by the detecting means to obtain the baseband signal. For example, the transmit signal is a frequency-modulated signal lying within a 900MHz band, which is converted into an intermediate frequency signal whose carrier frequency is 10.7MHz, by the single frequency converting means.

Further, an audio transmitting apparatus according to the present invention comprises a transmitter and a receiver, the transmitter including transmit signal forming means for modulating a carrier signal by an audio signal to form a transmit signal, and a transmitting antenna for transmitting the transmit signal formed by the transmit signal forming means, and the receiver including a receiving antenna for receiving the transmit signal, single frequency converting means for converting the frequency of the transmit signal received by the receiving antenna into an intermediate frequency signal, and detecting means for detecting the intermediate frequency signal outputted from the frequency converting means to obtain the audio signal, wherein the frequency converting means included in the receiver sets the frequency of the transmit signal to 1/30 or less to obtain the intermediate frequency signal.

On the transmitting side, the transmit signal is formed by effecting modulation process on the audio signal and transmitted to the receiving side through the transmitting antenna. While on the receiving side, the frequency of the transmit signal received by the receiving antenna is converted into the frequency of 1/30 or less by the single frequency converting means to obtain the intermediate frequency signal. The resultant intermediate frequency signal is subjected to the detecting process by the detecting means to obtain the audio signal as the baseband signal. For example, the transmit signal is a frequency-modulated signal lying within a 900MHz band, which is converted into an intermediate frequency signal whose carrier frequency is 10.7MHz, by the single frequency converting means.

Brief Description of the Drawings

Fig. 1 is a block diagram showing the structure of a transmitter employed in an audio transmitting apparatus according to the present invention;
Fig. 2 is a block diagram illustrating the structure of a receiver employed in the audio transmitting apparatus according to the present invention;
Fig. 3 is a diagram depicting the assignment of frequencies in the neighborhood of 900MHz employed in the United States of America;
Fig. 4 is a block diagram showing one example of the structure of a transmitter employed in a conventional audio transmitting apparatus; and
Fig. 5 is a block diagram illustrating one example of the structure of a receiver employed in the conventional audio transmitting apparatus.

Best Mode for Carrying Out the Invention

This mode shows an example applied to an audio transmitting apparatus for transmitting audio signals outputted from a television receiver in the United States of America. The audio transmitting apparatus comprises a transmitter 400 and a receiver 500.

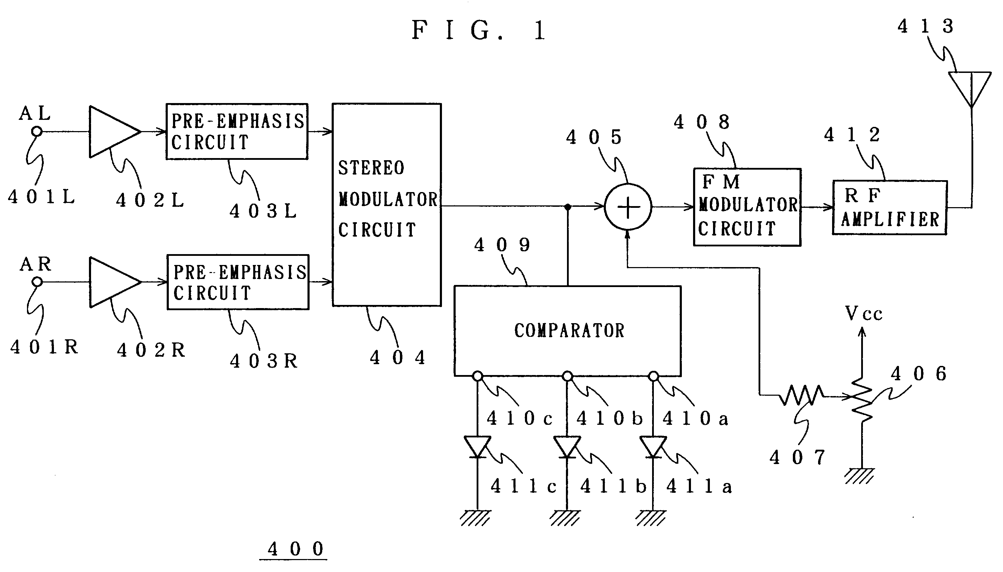

The transmitter 400 will first be described with reference to Fig. 1. The transmitter 400 has input terminals 401L and 401R respectively supplied with a left channel audio signal AL and a right channel audio signal AR both outputted from the television receiver, buffer amplifiers 402L and 402R, and pre-emphasis circuits 403L and 403R for emphasizing high-frequencies of the audio signals AL and AR. The buffer amplifiers 402L and 402R are respectively inserted between the input terminal 401L and the pre-emphasis circuit 403L and between the input terminal 401R and the pre-emphasis circuit 403R.

Further, the transmitter 400 includes a stereo modulator circuit 404 for obtaining a stereo-modulated signal of pilot-tone system, using the audio signals AL and AR whose high-frequencies are emphasized by the pre-emphasis circuits 403L and 403R. In this case, a subcarrier frequency is set to 4fh so that beat signals composed of the horizontal-frequency (fh) components of a video signal, which are contained in the audio signals AL and AR, are prevented from being generated within an audio frequency band.

Moreover, the transmitter 400 has an adder 405 for adding a bias voltage to the stereo-modulated signal outputted from the stereo modulator circuit 404, and a variable resistor 406 for supplying a bias voltage to the adder 405. One end of the variable resistor 406 is connected to a power source terminal (Vcc) and the other end thereof is grounded. A voltage appeared in a moving element of the variable resistor 406 is supplied to the adder 405 through a resistor 407 as a bias voltage.

The transmitter 400 has an FM modulator circuit 408 for effecting a frequency-modulating process on the stereo-modulated signal added with the bias voltage outputted from the adder 405. The FM modulator circuit 408 is composed of a voltage-controlled oscillator. When the stereo-modulated signal added with the above-described bias voltage is supplied to the FM modulator circuit 408 as a control signal, a transmit signal (FM-modulated signal) whose carrier frequency falls within a 900MHz band, is obtained.

Meanwhile, in the receiver employed in the present embodiment, a mixer serving as a single frequency converting means converts the transmit signal whose carrier frequency falls within the 900MHz band, into an intermediate frequency signal whose carrier frequency is 10.7MHz as will be described later. The frequency-conversion of a receive frequency (corresponding to the frequency of the transmit signal) into an intermediate frequency (corresponding to the carrier frequency of the intermediate frequency signal) by the single frequency converting means is generally limited to about 1/30 for image interference (reference: "Design and Calculation of Transistor Radio by Kiichi Sato and Shozo Takahashi, published by Ohm Co. Ltd., in 1968")

An expression for calculating an image-interference ratio $\alpha$ is given from a (6.2) expression in the reference.

$$\alpha \doteqdot 1/(4fmQ/fs)^n \qquad (6.2)$$

where

$\alpha$:     image-interference ratio
fm:     intermediate frequency
fs:     receive frequency
Q :     fineness of tuning circuit
n :     number of stages of tuning circuits

Now consider where since an intermediate frequency amplifier circuit is of a general double-tuned circuit, n is set equal to 2 and since the actual range of the fineness of the tuning circuit ranges from 20 to 30, Q is set equal to 25. If the image-interference ratio $\alpha$ at the time that fs (receive frequency) is selected so as to be equal to 900MHz and fm (intermediate frequency) is selected so as to be equal to 10.7MHz, is calculated, then $\alpha \doteqdot$ -3.0dB. Therefore, the result of calculation greatly deviates from the practical range (from -20dB to -26dB) of the image-interference ratio $\alpha$. On the other hand, if the image-interference ratio $\alpha$ at the time that fs = 900MHz and fm = 30MHz are selected, is calculated under the same condition, then $\alpha \doteqdot$ -20.9dB and falls within the practical range only with difficulty.

Thus, the conversion of the frequency of the transmit signal falling within the 900MHz band into the intermediate frequency signal whose carrier frequency is 10.7MHz, by the mixer serving as the single frequency converting means is not normally performed because the image-interference ratio $\alpha$ does not fall within the practical range. However, the present embodiment allows such a construction by selecting the available band of the frequency of the transmit signal in the following manner.

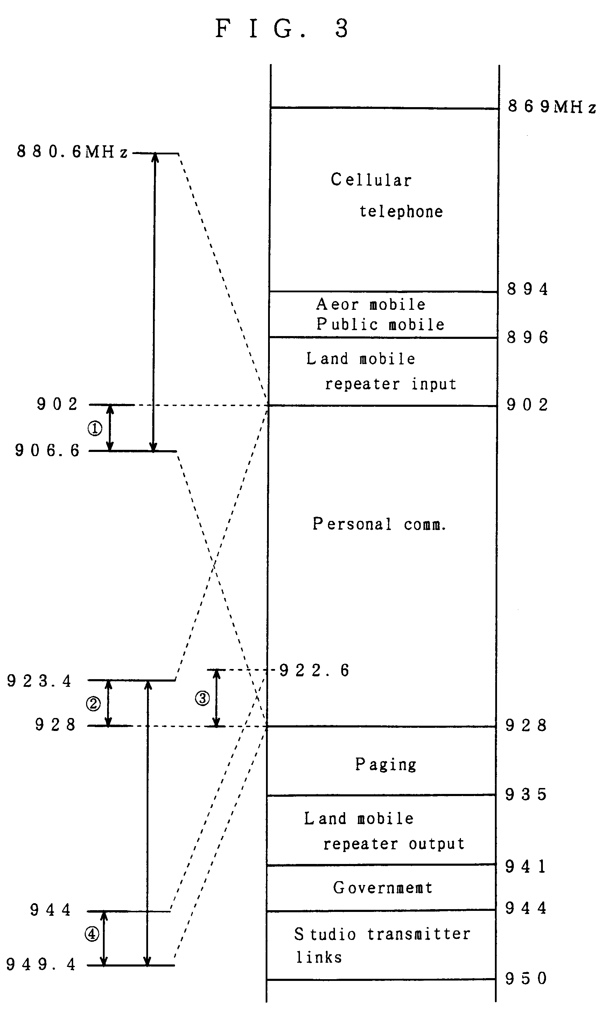

That is, the assignment of the frequencies in the vicinity of 900MHz in the United States of America is determined as shown in Fig. 3. 869MHz to 894MHz are used as a band available for use in a cellular phone, 894MHz to 896MHz are used as a band available for use in an aeronautical mobile, 896MHz to 902MHz are used as band available for use in a land mobile repeater input, 902MHz to 928MHz are used as a band available for use in personal communications, 928MHz to 935MHz are used as a band available for use in a pager (pocket bell), 935MHz to 941MHz are used as a band for use in land mobile repeater output, 941MHz to 944MHz are used as a band available for use in the government, and 944MHz to 950MHz are used as a band available for use in studio transmitter links. Thus, a 4-to-5MHz band of the 902MHz-to-928MHz band available for use in the personal communications is basically used as the frequency of the transmit signal in the above 900MHz band in the present embodiment.

When a local oscillation frequency is now set to the lower side of the transmit frequency, an image interference frequency band with respect to the 902MHz-to-928MHz band available for use in the personal communications becomes a band ranging from 880.6MHz to 906.6MHz. A band (corresponding to a band indicated by ① ) ranging from 902MHz to 906.6MHz is included in the band available for use in the personal communications. Thus, since the band ranging from 902MHz to 906.6MHz becomes the image-interference frequency band when a band (corresponding to a band indicated by ② ) ranging from 923.4MHz to 928MHz is selected as the usage band, the rate of occurrence of strong image interference is low.

On the other hand, when the local oscillation frequency is set to the upper side of the transmit frequency, the image-interference frequency band relative to the 902MHz-to-928MHz band available for use in the personal communications becomes a band ranging from 923.4MHz to 949.4MHz. The band (corresponding to the band indicated by ② ) is included in the band available for use in the personal communications. Thus, since the band ranging from 923.4MHz to 928MHz is brought to the image-interference frequency band when the band (corresponding to the band designated at ① ) ranging from 902MHz to 906.6MHz is selected as the usage band, the rate of occurrence of the strong image interference is low.

Further, when the local oscillation frequency is set to the upper side of the transmit frequency, the image-interference frequency band relative to a band (corresponding to a band indicated by ③ ) ranging from 922.6MHz to 928MHz included in the 902MHz-to-928MHz band available for use in the personal communications becomes a band (corresponding to a band indicated by ④ ) ranging from 944MHz to 949.4MHz included in the band available for use in the studio transmitter links. Thus, when the band ranging from 922.6MHz to 928MHz is selected as the usage band, the band ranging from 944MHz to 949.4MHz is used as the image-interference frequency band. This band corresponds to the band available for use in the studio transmitter links and is considered to be operated indoors and at a low output and reduced in the frequency of its usage. Therefore, the rate of occurrence of the image interference is very low.

Thus, when the local oscillation frequency is set to the upper side of the transmit frequency, the rate of occurrence of the image interference can be reduced by selecting the band of either ① or ③ as the usage band. On the other hand, when the local oscillation frequency is set to the lower side of the transmit frequency, the rate of occurrence of the image interference can be lowered by selecting the band of ② as the usage band. In the present embodiment, the band (corresponding to the band designated at ③) ranging from 922.6MHz to 928MHz is selected as the usage band on condition that the local oscillation frequency is set to the upper side of the transmit frequency by, for example, the receiver.

The transmitter 400 has also a comparator 409 for comparing the levels of the stereo-modulated signal outputted from the stereo modulator circuit 404 to monitor the percentage of modulation (degree of modulation). The comparator 409 is provided with output terminals 410a, 410b and 410c. The output terminal 410a is grounded through the anode and cathode of a light emitting diode 411a for emitting light in orange color. The output terminal 410b is grounded through the anode and cathode of a light emitting diode 411b for emitting light in green color. Further, the output terminal 410c is grounded through the anode and cathode of a light emitting diode 411c for emitting light in red color.

In this case, a signal brought to a high level "H" when the level of the stereo-modulated signal exceeds a level corresponding to a modulation percentage of 20%, is obtained from the output terminal 410a of the comparator 409 and a signal brought to a low level "L" at all other times is obtained from the output terminal 410a of the comparator 409. Further, a signal brought to the high level "H" when the level of the stereo-modulated signal exceeds a level corresponding to a modulation percentage of 50% and brought to the low level "L" at all other times, is obtained from the output terminal 410b of the comparator 409. Moreover, a signal brought to the high level "H" when the level of the stereo-modulated signal exceeds a level corresponding to a modulation percentage of 100%, and brought to the low level "L" at all other times, is obtained from the output terminal 410c of the comparator 409.

Thus, when the level of the stereo-modulated signal is equal to or below the level corresponding to the modulation percentage of 20%, no signal of high level "H" is obtained at any of the output terminals 410a through 410c of the comparator 409, so that any of the light emitting diodes 411a through 411c is brought to a non-emitting state. Further, when the level of the stereo-modulated signal exceeds the level corresponding to the modulation percentage of 20% and is equal to or below the level corresponding to the modulation percentage of 50%, a signal of a high level "H" is obtained from the output terminal 410a of the comparator 409 so that the light emitting diode 411a is brought to an emitting state. When the level of the stereo-modulated signal exceeds the level corresponding to the modulation percentage of 50% and is equal to or less than the level corresponding to the modulation percentage of 100%, a level of a high level "H" is obtained from each of the output terminals 410a and 410b of the comparator 409 so that the light emitting diodes 411a and 411b are respectively brought to the emitting state. Moreover, when the level of the stereo-modulated signal exceeds the level corresponding to the modulation percentage of 100%, a signal of a high level "H" is obtained from each of the output terminals 410a through 410c of the comparator 409 so that the light emitting diodes 411a through 411c are respectively brought to the emitting state. Accordingly, the percentage of modulation can be adjusted to a suitable value (e.g., 50%) by changing the level of the stereo-modulated signal with the stereo modulator circuit 404 while confirming the emitted states of the light emitting diodes 411a through 411c.

Further, the transmitter 400 has a RF amplifier 412 for amplifying the transmit signal outputted from the FM modulator circuit 408 up to a level transmittable through a transmitting antenna, and the transmitting antenna 413 for transmitting the transmit signal amplified by the RF amplifier 412 to the receiving side.

In the above-described construction, the audio signals AL and AR respectively supplied to the input terminals 401L and 401R are respectively supplied via the buffer amplifiers 402L and 402R to the pre-emphasis circuits 403L and 403R where they are subjected to high-frequency emphasis, followed by supply to the stereo modulator circuit 404 from which the stereo-modulated signal of pilot tone is formed. After the bias voltage is added to the stereo-modulated signal by the adder 405, the stereo-modulated signal is supplied to the FM modulator circuit 408 where it is subjected to an FM modulation process, whereby the transmit signal (FM-modulated signal) whose carrier frequency falls within the 900MHz band, is formed. The carrier frequency, accordingly, the transmit frequency can be adjusted by shifting the location of the moving element of the variable resistor 406 to adjust the bias voltage. The FM-modulated signal outputted from the FM modulator circuit 408 is amplified by the RF amplifier 412, and then it is supplied to the transmitting antenna 413 so as to be transmitted to the receiving side.

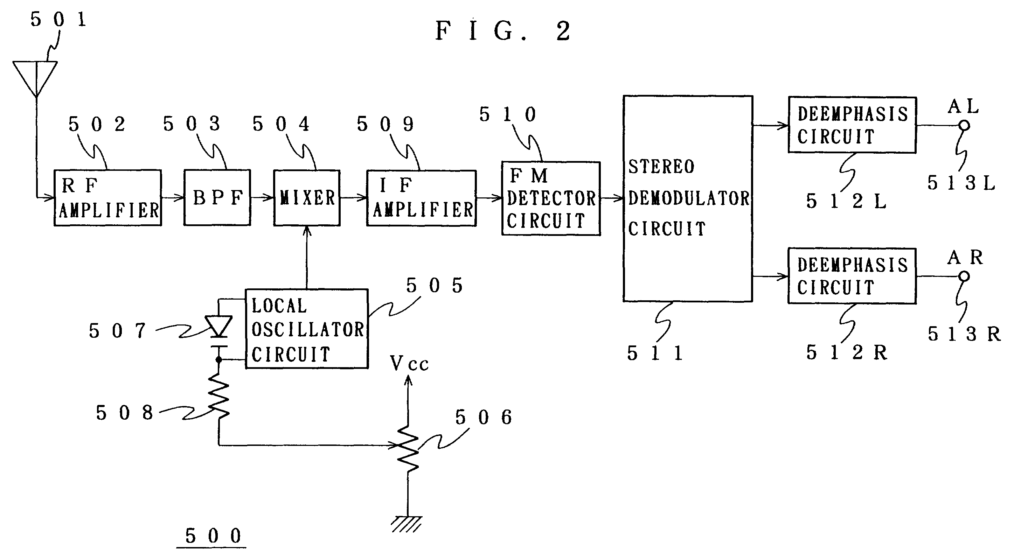

The receiver 500 will next be described with reference to Fig. 2. The receiver 500 has a receiving antenna 501 for receiving a transmit signal sent from the transmitting side, an RF amplifier 502 for amplifying the transmit signal received by the receiving antenna 501, a band-pass filter 503 for extracting the transmit signal amplified by the RF amplifier 502 therefrom, a mixer 504 for converting the frequency of the transmit signal extracted by the band-pass filter 503 to obtain an intermediate frequency signal whose carrier frequency is 10.7MHz, a local oscillator circuit 505 for supplying a variable local oscillation signal to the mixer 504, and a variable resistor 506 for obtaining a tuning voltage.

A pass band of the band-pass filter 503 is set so as to coincide with the above-described band used for the frequency of the transmit signal, the band (corresponding to the band of ③ shown in Fig. 3) of the frequencies ranging from 922.6MHz to 928MHz in the present embodiment. This band-pass filter 503 is provided in place of the tuning circuit.

A variable capacitance diode 507 is connected to the local oscillator circuit 505. One end of the variable resistor 506 is connected to a power source terminal (Vcc) and the other end thereof is grounded. A tuning voltage appeared in a moving element of the variable resistor 506 is applied to the cathode of the variable capacitance diode 507 through a resistor 508. In this case, the frequency of the local oscillation signal outputted from the local oscillator circuit 505 can be controlled by displacing the position of the moving element of the variable resistor 506 to adjust the tuning voltage, whereby the tuning operation of the receiver 500 can be performed. Incidentally, the local oscillation frequency outputted from the local oscillator circuit 505 is set to the upper side of the transmit frequency as described above.

Further, the receiver 500 includes an intermediate frequency amplifier 509 for amplifying the intermediate frequency signal outputted from the mixer 504, an FM detector circuit 510 for subjecting the intermediate frequency signal amplified by the intermediate frequency amplifier 509 to an FM-detecting process to obtain a stereo-modulated signal as a baseband signal, a stereo demodulator circuit 511 for subjecting the stereo-modulated signal outputted from the FM detector circuit 510 to a stereo demodulating process to obtain a left channel audio signal AL and a right channel audio signal AR, deemphasis circuits 512L and 512R for respectively effecting a high-frequency attenuating process to the audio signals AL and AR outputted from the stereo demodulator circuit 511 to restore the frequency response to flatness, and output terminals 513L and 513R for respectively outputting the audio signals AL and AR outputted from the deemphasis circuits 512L and 512R.

In the above-described construction, the 900MHz-band transmit signal from the transmitting side, which has been received by the receiving antenna, is amplified by the RF amplifier 502 and transmitted through the band-pass filter 503, followed by supplied to the mixer 504 where it is converted into the intermediate frequency signal whose carrier frequency is 10.7MHz. Further, the intermediate frequency signal outputted from the mixer 504 is amplified by the intermediate frequency amplifier 509 and thereafter subjected to the FM-detecting process by the FM detector circuit 510, so that the stereo-modulated signal of pilot-tone system is obtained. Next, the stereo-modulated signal is supplied to the stereo demodulator circuit 511 where it is subjected to the stereo-demodulating process to obtain the audio signals AL and AR. The resultant audio signals AL and AR are sent to the output terminals 513L and 513R through the deemphasis circuits 512L and 512R respectively. Thus, a stereo audio output based on the audio signals AL and AR can be obtained by connecting, for example, a headphone to the output terminals 513L and 513R.

In the present embodiment as described above, the receiver 500 is constructed such that the mixer 504 used as the single frequency converting means converts the frequency of the transmit signal of 900MHz into the intermediate frequency signal whose carrier frequency is 10.7MHz and the band-pass filter 503 is inserted into the stage preceding the mixer 504 without the conventionally-used tuning circuit being inserted into the stage. Therefore, an advantage can be brought about in that the receiver 500 can be configured simple and at low cost as compared with the conventional receiver.

In the receiver 500 in this case, the local oscillation frequency is set so as to be the upper side of the transmit frequency and the band (corresponding to the band of ③ shown in Fig. 3) of the frequencies ranging from 922.6MHz to 928MHz at which the rate of occurrence of the image interference is lowered when the local oscillation frequency is set to the upper side of the transmit frequency on the receiver side, is selected as the band used for the frequencies of signals to be transmitted. Therefore, the occurrence of the image interference can be avoided at a high probability even if the mixer 504 converts the frequency of the transmit signal lying within the 900MHz band into the intermediate frequency signal whose carrier frequency is 10.7MHz. When the image interference is being produced, the moving element of the variable resistor 407 employed in the transmitter 400 is shifted in position to change the transmit frequency, thereby making it possible to avoid causing the image interference.

The present embodiment shows the case in which when the stereo-modulated signal of pilot-tone system is produced from the stereo modulator circuit 104 of the transmitter 400, the subcarrier frequency of the stereo-modulated signal is set to the frequency (4fh) corresponding to four times the horizontal frequency (fh) of the video signal. It is therefore possible to satisfactorily prevent the beat signals composed of the horizontal-frequency (fh) components of the video signal, which are contained in the audio signals AL and AR, from being generated within the audio frequency band.

The aforementioned embodiment describes the case in which the present invention has been applied to the audio transmitting apparatus for transmitting the audio signals. It is however needless to say that the present invention can be applied to a transmitting device for transmitting video signals or other signals.

Industrial Applicability

As has been described above, the receiver, the receiving method and the audio transmitting apparatus according to the present invention are suitable for use in an audio transmission apparatus for frequency-modulating audio signals outputted from a television receiver or an audio system or the like and transmitting them by radio.

## Claims

1. A receiver comprising:

   a receiving antenna for receiving a transmit signal;
   single frequency converting means for converting the frequency of the transmit signal received by said receiving antenna into an intermediate frequency signal; and
   detecting means for detecting the intermediate frequency signal outputted from said frequency converting means to obtain a baseband signal,
   wherein said frequency converting means sets the frequency of the transmit signal to 1/30 or less to obtain the intermediate frequency signal.

2. The receiver as claimed in claim 1, wherein the transmit signal is a signal lying within a 900MHz band and the intermediate frequency signal is a signal whose carrier frequency is 10.7MHz.

3. The receiver as claimed in claim 1, wherein a bandpass filter for allowing the transmit signal to pass therethrough is inserted into a stage preceding said frequency converting means.

4. A signal receiving method comprising the following steps:

   a step for receiving a transmit signal;
   a step for converting a frequency of the received transmit signal into 1/30 or less to obtain an intermediate frequency signal; and
   a step for detecting the intermediate frequency signal to obtain a baseband signal.

5. An audio transmitting apparatus comprising:

   a transmitter; and
   a receiver,
   said transmitter including,

   transmit signal forming means for modulating a carrier signal by an audio signal to form a transmit signal; and
   a transmitting antenna for transmitting the transmit signal formed by said transmit signal forming means, and
   said receiver including,
   a receiving antenna for receiving the transmit signal;
   single frequency converting means for converting the frequency of the transmit signal received by said receiving antenna into an intermediate frequency signal, and
   detecting means for detecting the intermediate frequency signal outputted from said frequency converting means to obtain the audio signal,
   wherein said frequency converting means included in said receiver sets the frequency of said transmit signal to 1/30 or less to obtain the intermediate frequency signal.

6. The audio transmitting apparatus as claimed in claim 5, wherein the transmit signal is a signal lying within a 900MHz band and the intermediate frequency signal is a signal whose carrier frequency is 10.7MHz.

7. The audio transmitting apparatus as claimed in claim 5, wherein a bandpass filter for allowing the transmit signal to pass therethrough is inserted into a stage preceding said frequency converting means.

8. The audio transmitting apparatus as claimed in claim 5, wherein the audio signal is a stereo-modulated signal of pilot-tone system and a subcarrier frequency of the stereo-modulated signal is set to a frequency increased by four times the horizontal frequency of a video signal.

# FIG. 1

EP 0 957 588 A1

400

F I G .  2

501

502    503    504    509    510

| RF AMPLIFIER | BPF | MIXER | IF AMPLIFIER | FM DETECTOR CIRCUIT | STEREO DEMODULATOR CIRCUIT | DEEMPHASIS CIRCUIT |

AL
513L
512L

DEEMPHASIS CIRCUIT
AR
513R
512R

511

507
505

LOCAL OSCILLATOR CIRCUIT

508

Vcc

506

500

EP 0 957 588 A1

# F I G .  3

# FIG. 4

EP 0 957 588 A1

FIG. 5

EP 0 957 588 A1

## INTERNATIONAL SEARCH REPORT

| International application No. |
| --- |
| PCT/JP96/03686 |

### A. CLASSIFICATION OF SUBJECT MATTER

Int. Cl$^6$  H04B1/26, H04H5/00

According to International Patent Classification (IPC) or to both national classification and IPC

### B. FIELDS SEARCHED

Minimum documentation searched (classification system followed by classification symbols)

Int. Cl$^6$  H04B1/26, H04H5/00

Documentation searched other than minimum documentation to the extent that such documents are included in the fields searched

| | |
| --- | --- |
| Jitsuyo Shinan Koho | 1926 - 1996 |
| Kokai Jitsuyo Shinan Koho | 1971 - 1996 |
| Toroku Jitsuyo Shinan Koho | 1994 - 1996 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP, 6-284033, A (Toshiba Corp.),<br>October 7, 1994 (07. 10. 94),<br>Page 3, column 3, line 41 to column 4, line 40<br>(Family: none) | 1 - 4<br>5 - 8 |
| Y | JP, 52-107702, A (Sansui Electric Co., Ltd.),<br>September 9, 1977 (09. 09. 77),<br>Page 1, lower right column, line 16 to page 2,<br>upper left column, line 15 (Family: none) | 5 - 8 |
| Y | Microfilm of the specification and drawings<br>annexed to the written application of Japanese<br>Utility Model Application No. 41295/1988<br>(Laid-open No. 146639/1989)(Sanyo Electric Co.,<br>Ltd.),<br>October 9, 1989 (09. 10. 89),<br>Page 2, lines 1 to 8 | 8 |

☐ Further documents are listed in the continuation of Box C.      ☐ See patent family annex.

| | |
| --- | --- |
| *      Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| March 19, 1997 (19. 03. 97) | April 1, 1997 (01. 04. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)